# EUROPEAN PATENT APPLICATION

(11) **EP 3 156 201 A1**
(43) Date of publication of application: **19.04.2017**
(21) Application number: 15805866.9
(22) Date of filing: 04.06.2015
(51) Int. Cl.: B28B 3/00, F16L 59/04

(54) **CONTINUOUS MANUFACTURING METHOD FOR VACUUM INSULATION MATERIAL**

(30) Priority: 10.06.2014 KR 20140069807
(71) Applicant: Kyung Dong One Corporation, Seoul 150-870 (KR)
(72) Inventor: YUN, Jong Hyun, Cheonan-si Chungcheongnam-do 330-799 (KR); NAM, Dae Woo, Asan-si Chungcheongnam-do 336-831 (KR); HWANG, Soo Ok, Cheongju-si Chungcheongbuk-do 360-832 (KR)
(74) Representative: Patentanwaltskanzlei Hübscher
(86) International application number: PCT/KR2015/005618
(87) International publication number: WO 2015/190751

(57) **Abstract**

The present invention relates to a continuous manufacturing method for a vacuum insulation material, including: a first step of putting a porous insulation material into an inner envelope having permeability, three sides thereof being closed and one side thereof being open, and then sealing the inner envelope; a second step of flattening an upper broad side of the inner envelope; a third step of compressing the inner envelope flattened in the second step; a fourth step of sealing all sides of the inner envelope compressed in the third step, except for one side, with an outer envelope having a shielding property, and packaging the sealed inner envelope; and a fifth step of sealing the one side of the inner envelope not sealed in the third step by putting the inner envelope sealed in the fourth step into a vacuum chamber and performing a vacuum operation.

## Description

### Technical Field

The present invention relates to a continuous manufacturing method for an outer envelope material having a shielding property and a vacuum insulation material having a predetermined vacuum pressure therein. More particularly, the present invention relates to a continuous manufacturing method for a vacuum insulation material, which simplifies a manufacturing process using continuous production and enhances productivity, thus being economical and having excellent properties.

### Background Art

Generally, a vacuum insulation material is an insulation material, which has very low heat conductivity and is enclosed on all sides thereof by an outer envelope material that has a high gas and vapor shielding efficiency, with an organic or inorganic open porous core disposed in the vacuum insulation material.

The inner core is mainly formed of glass fiber, which is inorganic fiber, or synthetic silica, which is porous inorganic powder.

In the case of a glass fiber vacuum insulation material, even if it is rolled in a multilayer mat shape or pressed, there is no damage to the core. Furthermore, a glass fiber mat which has a large thickness (two to five times a final target thickness) before vacuum is applied thereto is compressed during a vacuum operation therein or is changed into a thin shape by vacuum pressure. Therefore, to manufacture a vacuum insulation material, the glass fiber mat is generally put into an outer shielding envelope having three closed sides and one open side.

In the case of a synthetic silica vacuum insulation material, powder type synthetic silica is compressed and formed to a board shape. Thereafter, the synthetic silica board is cut to have a predetermined size and put into an outer shielding envelope, thus forming a vacuum board. Unlike the glass fiber core, the synthetic silica core is formed using powder particles, thereby it is broken or damaged by external pressure. Therefore, synthetic silica core is directly packaged either automatically or manually using a roll-type outer shielding envelope material on a product line rather than being put into an envelope having three closed sides and one open side. Furthermore, during the vacuum operation, there is the possibility of a vacuum machine being damaged by synthetic silica powder. Therefore, a double structure, in which the core is first enclosed by an inner envelope material having permeability and then further enclosed by an outer envelope material, is mainly used.

Due to the above-mentioned structure and workability for the synthetic silica vacuum insulation material, not only does it have higher material cost, but also higher product costs due to a complex manufacturing process, compared to that of the glass fiber vacuum insulation material.

In an effort to overcome these problems, there was proposed a technology in which powder is put into an inner envelope having permeability in order to have a thickness which is several times to several ten times a predetermined desired thickness, and thereafter it is compressed and then cut again to have the predetermined thickness, thus forming an insulation material or a vacuum insulation material. However, there is a problem in that the wider the area of a product, the more difficult to cut the envelope to have the predetermined thickness.

In addition, in Korean Patent Application Publication No. 1995-13664, entitled "Vacuum insulation panel and method of manufacturing the same", there was proposed a system of supplying a lower film from the outside onto a dewatering mold installed in a vacuum chamber, a system for supplying powder onto the mold, and a method of manufacturing by compressing the powder put in the lower film to form it into a predetermined shape and thermal-bonding upper and lower films. However, because all processes are performed in the vacuum chamber, equipment is complex, and supplied powder is not uniform since it is not compressed in a flattened state. Furthermore, the lower film may be damaged.

### [Prior Art Document]

### [Patent Document]

(Patent Document 1) US Patent No. 5,327,703 (July 12, 1994)
(Patent Document 2) US Patent No. 8,333,279 (Dec. 18, 2012)
(Patent document 3) Korean Patent Registration No. 10-1102262 (Dec. 28, 2011)
(Patent Document 4) Korean Patent Application Publication No 10-2012-0097328 (Sept. 03, 2012)
(Patent Document 5) WO 2013/001522 (Jan. 03, 2013)

### DISCLOSURE

### Technical Problem

Accordingly, in regards to the conventional method of manufacturing a vacuum insulation material using synthetic silica, an object of the present invention is to provide a continuous manufacturing method for a vacuum insulation material in which the forming method is improved so that cutting process is removed after forming, damage during the manufacturing process is prevented by performing individual forming, and is able to produce in a continuous manufacturing manner, thereby reducing material and production costs.

### Technical Solution

An embodiment of the present invention provides a continuous manufacturing method for a vacuum insulation material, including: a first step of putting a porous insulation material into an inner envelope having permeability and then sealing the inner envelope, the inner envelope having three closed sides and one open side; a second step of flattening the wide surface of the inner envelope with the porous insulation material of the first step therein; a third step of compressing the envelope flattened in the second step to a predetermined thickness; a fourth step of sealing all sides of the inner envelope compressed in the third step, except for one side thereof, with an outer envelope material having a shielding property, and packaging the sealed envelope; and a fifth step of sealing the one side that has not been sealed in the third step, by putting the envelope sealed in the fourth step into a vacuum chamber and performing a vacuum operation until a predetermined pressure is reached.

### Advantageous Effects

A continuous manufacturing method for a vacuum insulation material according to the present invention is able to simplify the forming process of a porous insulation material, makes it possible to individually manufacture a product to a desired size or shape and can simplify this process. Furthermore, since the manufacturing process does not include a cutting process, a loss rate can be reduced. In addition, a continuous manufacturing is possible, thus reducing the production cost.

### Brief Description of Drawings

FIG. 1 is a view illustrating a continuous manufacturing process for a vacuum insulation material according to an embodiment of the present invention; and
FIG. 2 is a view illustrating an embodiment of a method of filling an inner envelope having permeability with porous insulation material.

### Mode for Invention

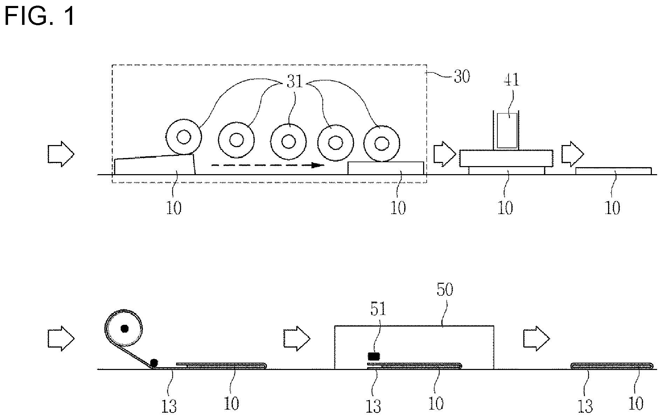

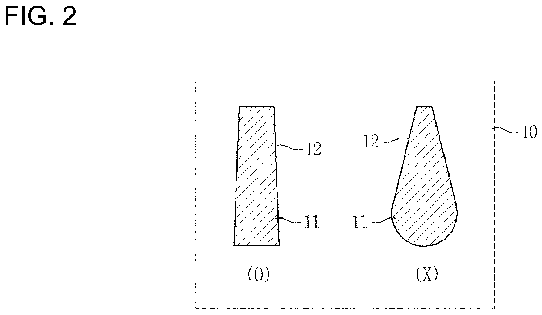

Hereinafter, the present invention will be described in detail with reference to the accompanying drawings. FIG. 1 is a view illustrating a continuous manufacturing process for a vacuum insulation material according to an embodiment of the present invention. FIG. 2 is a view illustrating an embodiment of a method of filling an inner envelope having permeability with porous insulation material.

To achieve the above-mentioned object, a continuous manufacturing method for a vacuum insulation material according to the present invention includes a first step of putting a porous insulation material into an inner envelope having permeability, for example, into an inner envelope having three closed sides and one open side, and sealing the inner envelope.

Although FIG. 1 illustrates an embodiment of the continuous manufacturing method for the vacuum insulation material, the first step of putting the porous insulation material into the inner envelope having permeability and sealing the inner envelope is not shown in FIG. 1. In the method according to the present invention, the first step includes measuring the amount of porous insulation material, putting the porous insulation material into the inner envelope, and simply sealing the inner envelope. The sealed inner envelope may have a structure shown by reference numeral 10 of FIG. 2.

In FIGS. 1 and 2, reference numeral 10 denotes an insulation material sealed in the inner envelope, reference numeral 11 denotes the insulation material, and reference numeral 12 denotes the inner envelope. With regard to the putting of the porous insulation material 11 into the inner envelope 12, it may be advantageous for the porous insulation material 11 to be put into the inner envelope 12 such that the surface of a wide side has a uniform width, as shown in the left view (O) of FIG. 2, rather than having a shape in which the porous insulation material 11 is wider on the lower side, as shown in the right view (X) of FIG. 2. The reason for this is because a flattening process that is a following step can be facilitated and the properties of a porous synthetic silica core can be uniformized.

In the continuous manufacturing method for the vacuum insulation material according to the present invention, at least one of synthetic silica, expanded perlite and expanded vermiculite may be selected as the porous insulation material. The porous insulation material may be additionally mixed with opacifying agent to enhance the insulation performance thereof and with fibers to enhance the strength thereof, respectively.

At least one of silicon carbide, graphite, zirconia, zircon, alumina and titanium oxide may be selected and used as the opacifying agent. At least one of inorganic fiber such as glass fiber, mineral wool or zirconium and organic fiber such as polyethylene, polypropylene, polyester or nylon may be selected and used as the fiber.

In the present invention, at least one of cloth formed of organic fiber, nonwoven fabric formed of organic fiber, cloth formed of inorganic fiber and nonwoven fabric formed of inorganic fiber may be selected and used as the inner envelope having permeability.

The sealing method may be changed depending on the material of the inner envelope. In the case of cloth or nonwoven fabric formed from organic fiber, the inner envelope is sealed by thermal bonding. In this regard, temperature applied may be different depending on the material. Generally, the thermal bonding may be performed by heating to a temperature between approximately 50°C and approximately 250°C. In the case of cloth or nonwoven fabric formed of inorganic fiber, three kinds of methods may be used for sealing. This includes sewing using a sewing machine, bonding using an adhesive, and coating a sealing portion with organic material in advance and thermally bonding it. In the case of thermal bonding, the heating temperature is also preferably between approximately 50°C and approximately 250°C.

In the continuous manufacturing method for the vacuum insulation material according to the present invention, the second step is performed in a state in which the inner envelope 10 in which the porous insulation material is sealed is laid, as shown in FIG. 1, such that the wide sides of the inner envelope 10 face the bottom and top sides. This is the step of flattening the inner envelope 10.

The flattening process denoted by reference numeral 30 in FIG. 1 is the step of flattening the sealed inner envelope 10 in which the porous insulation material is sealed, and then using a plurality of flattening rollers to make the wide sides of the sealed inner envelope 10 uniform.

The plurality of flattening rollers 31 used for the flattening process 30 are installed such that the heights of the flattening rollers 31 are gradually reduced from thickness of the initially inserted sealed inner envelope 10 to a predetermined thickness. In this regard, the predetermined thickness ranges from a final target thickness to a thickness of two to five times the target thickness. It is preferable to work with the predetermined thickness that is two to three times the target thickness. This will be described in detail in the following description of a compression pressing process of the third step.

In the present invention, the flattening rollers 31 may be configured in a shape designed for convenience of work. The flattening rollers 31 may be a bundle-type structure in which a plurality of thin rollers form a single circle, or a crown-type, or a roller structure, in which the center and the sides of the roller have different thicknesses (for example, during the flattening process, the sealed inner envelope 10 can be flattened from the inside to the outside or from the outside to the inside), or in which protrusions are formed on the surface of the roller, or have a cross-sectional shape similar to that of a windmill. Furthermore, the flattening rollers 31 may be a belt conveyer structure in which rollers are connected to each other by a belt.

In the continuous manufacturing method for the vacuum insulation material according to the present invention, after the sealed inner envelope 10 has been flattened, the third step of compressing the inner envelope 10 to a predetermined thickness (a final target thickness) at a pressure of at least 10 mN/cm² using a compression press 41 is performed. The reason why it is preferable that the inner envelope 10 be formed to have a thickness of two or three times the target thickness during the preceding flattening process is because of the fact that the flattening process is performed in a continuous compressing manner and, if powder type particles are continuously compressed, an invisible crack may be formed in a compressed surface, or the powder particles are placed more to one side by a slip phenomenon. Therefore, a roller press, a belt press or the like may be used as the compression press 41 of the present invention, but a vertical operating press is preferable to the others.

The above-mentioned predetermined thickness refers to a final target thickness and may be different by manufacturers or products. For example, the predetermined thickness may be 5 mm, 6 mm, 8 mm, 10 mm, 12 mm, 15 mm, 20 mm, 40 mm, 60 mm, and so forth, or have a value therebetween or a value greater than this.

Thereafter, as the fourth step according to the present invention, there is performed the step of sealing all sides of a core formed by flattening and compressing the sealed inner envelope 10, except for one side, with an outer envelope 13 having gas and water shielding properties, and packaging the core. The outer envelope is supplied in a rolled state and encloses the core, formed by flattening and compressing the sealed inner envelope 10, such that only one side of the core is open and all the other sides are sealed.

Here, before the core is packaged with the outer envelope, a drying process of drying at a temperature between 50°C and 250°C may be added. The reason for this is to prevent porous particles from absorbing water during storage or manufacturing process and thus prevent the properties thereof from deteriorating.

Subsequently, at the fifth step according to the present invention, the core enclosed by the outer envelope is put into a vacuum chamber 50, and a target vacuum pressure is applied to the vacuum chamber 50 so that the vacuum chamber 50 has sufficient vacuum pressure. In this state, the opened one side of the outer envelope is also sealed, thus forming a vacuum insulation material. Because the thermal properties of the vacuum insulation material vary depending on the vacuum pressure, the vacuum pressure is not limited since it can be adjusted depending on conditions. However, it is effective when the vacuum pressure is at least 1 torr or more.

In this regard, at the fourth and fifth steps, the outer envelope material having the shielding properties is sealed by a thermal bonding method. Here, the temperature applied may be different depending on the material. For example, the thermal bonding may be performed by heating to a temperature of approximately 50°C and approximately 250°C. The thermal bonding process may be performed in such a way that a sealing bar is longitudinally disposed on one side of the outer envelope material and then the sealing bar is heated.

In the present invention, the vacuum insulation material may be continuously manufactured by repeatedly and continuously performing the above-mentioned steps. The conventional compressing and cutting process for porous particles is not required, whereby the productivity can be enhanced, and the vacuum insulation material can be economically produced.

Although the embodiment, particularly, the continuous manufacturing method, has been described, this does not limit the present invention, and those with ordinary knowledge in this art will understand that various modifications are possible without departing from the scope of the invention.

### [Description of reference numerals]

| | | | |
|---|---|---|---|
| 10: | Sealed inner envelope | 11: | Porous particles |
| 12: | Inner envelope material having permeability | | |
| 13: | Outer envelope material having gas and water shielding properties | | |
| 30: | Flattening process | 41: | Compression press |
| 50: | Vacuum chamber | 51: | Sealing bar |

## Claims

1. A continuous manufacturing method for a vacuum insulation material, comprising:
a first step of putting a porous insulation material into an inner envelope having permeability, the inner envelope having three closed sides and one open side;
a second step of flattening the inner envelope with wide sides as bottom and top surfaces;
a third step of compressing the inner envelope flattened in the second step to a predetermined thickness;
a fourth step of sealing all sides of the inner envelope compressed in the third step, except for one side thereof, with an outer envelope material having a shielding property, and packaging the sealed inner envelope; and
a fifth step of sealing the one side of the inner envelope that was not sealed in the third step, by putting the envelope sealed in the fourth step into a vacuum chamber and performing a vacuum operation so that a predetermined pressure is reached.

2. The continuous manufacturing method according to claim 1, further comprising, after the third step of compressing the inner envelope flattened in the second step to the predetermined thickness,
a drying step of drying the inner envelope at a temperature between 50°C and 250°C.

3. The continuous manufacturing method according to claim 1,
wherein the porous insulation material includes at least one selected from among synthetic silica, expanded perlite and expanded vermiculite.

4. The continuous manufacturing method according to claim 1,
wherein the porous insulation material is additionally mixed with an opacifying agent for enhancing insulation performance and with a fiber for enhancing strength, respectively.

5. The continuous manufacturing method according to claim 4,
wherein the opacifying agent includes at least one selected from among silicon carbide, graphite, zirconia, zircon, alumina and titanium oxide, and the fiber includes at least one selected from between an inorganic fiber including a glass fiber, mineral wool or zirconium, and an organic fiber including polyethylene, polypropylene, polyester or nylon.

6. The continuous manufacturing method according to claim 1,
wherein the inner envelope having the permeability includes at least one selected from among a cloth formed from an organic fiber, a nonwoven fabric formed from an organic fiber, a cloth formed from an inorganic fiber and a nonwoven fabric formed from an inorganic fiber.

7. The continuous manufacturing method according to claim 1,
wherein during the flattening process in the second step, a plurality of flattening rollers are used for uniform thickness.

8. The continuous manufacturing method according to claim 7,
wherein the flattening rollers are installed such that heights thereof are gradually reduced with respect to the inner envelope in which the insulation material has been sealed, and are configured to make the inner envelope have a thickness of two to three times a final target thickness.
